# EUROPEAN PATENT APPLICATION

(11) **EP 3 944 883 A1**
(43) Date of publication of application: **02.02.2022**
(21) Application number: 20187894.9
(22) Date of filing: 27.07.2020
(51) Int. Cl.: B01D 3/10, C12H 3/02, C12C 12/04

(54) **PLANT FOR REDUCING THE ALCOHOL CONTENT IN A BEVERAGE**

(71) Applicant: Api Schmidt-Bretten Gmbh&co. Kg, 75015 Bretten (DE)
(72) Inventor: Sautner, Karlheinz, 7419 Angelbachtal (DE)
(74) Representative: Mammel und Maser

(57) **Abstract**

The invention relates to an plant (10) for reducing an alcohol content in a beverage, with at least one degasser (30) to which the alcohol-containing beverage is supplied from a storage container which is connectable thereto, with a rectifier (23) which comprises a first column (31) and a second column (29) which are arranged separately and spatially adjacent to one another, with a line (26) branching off a bottom (24) of the second column (29) and leading to a separator (14), from which a reduced-alcohol beverage is discharged from the plant (10) via an outlet line (16), with a condenser (34) which is connected downstream of the rectifier (23), with a first vapour line (22), which is connected by an inlet (65) to the separator (14) and by an outlet (61) to the second column (29), with a second vapour line (33) which is connected by an inlet (65) to the first column (31) and by an outlet to the condenser (34), with a third vapour line (87), which is connected by an inlet (65) to the second column (39) and by an outlet (61) to the first column (31), with several pumps (43, 45, 46, 48) through which the alcoholic beverage, the vapours or the reduced-alcohol beverage are transported in the plant (10), wherein at least the rectifier (23) and a plurality of pumps (43, 45, 46, 48) are arranged completely within a transport frame (61). (See figure 5)

## Description

The invention concerns a plant for reducing the alcohol content in a beverage.

From DE 38 43 516 A1 such a plant for reducing the alcohol content in a beverage is known. This plant comprises a degasser to which the alcoholic beverage is fed from a storage container. Furthermore, a rectifier with a first and a second column is provided. A line branching off from the second column leads reduced-alcohol beverage to a separator, from which this reduced-alcohol beverage is discharged from the plant via an outlet line or fed to a collecting vessel. A condenser and a cooler are provided downstream of the rectifier. An alcohol concentrate can be discharged from the cooler.

Vapours are separated by the rectifier. These vapours may include alcohol, perfumes and/or aromatic substances. The alcohol is separated from the vapours. The rectifier is integrated in a closed circuit so that the vapours discharged in the rectifier are condensed and the condensate will be returned to the rectifier.

Such plants consist of a large number of individual components which are arranged in an upright position during operation. These components of the plant are delivered individually and assembled on site. The individual mechanical and electrical components and connections are installed directly on site. This is time-consuming. In addition, the requirements for shortening the time from delivery of the plant to commissioning on site are increasing.

The invention is based on the task of proposing a plant for reducing an alcohol content in a beverage, which enables a simple and quick plant.

This task is solved by a plant for reducing an alcohol content in a beverage, in which at least the rectifier and several pumps are completely arranged within a transport frame. This has the advantage that at least the rectifier and pumps are pre-installed in the transport frame and are at the production site. After delivery on site, it is only necessary to set up this transport frame and connect the components arranged in the transport frame to local connections, such as a storage tank for supplying alcoholic beverage, a collection tank in which alcohol no longer required by the plant is removed. This can save a considerable amount of time during installation on site and thus enable rapid commissioning.

Preferably the transport frame has an external dimension which corresponds to an internal dimension of a standard container. This allows easy transport and quick delivery of the plant from the place of production to the place of use. The transport of this plant can be made possible by means of transport containers both in land transport on the road or rail as well as in ship transport. Such standard containers are standardized large-capacity containers, which include standardized sizes of, for example, 20 feet, 40 feet or 45 feet.

The transport frame may be arranged upright on one end face for operation of the plant and lying on one side face for transport in a standard container. Thus, after delivery of the plant to the site, only the erection of the transport frame from a lying to a standing position can be sufficient. The components arranged in the transport frame are installed in the plant ready for operation.

The transport frame is preferably cuboidal and has a closed circumferential frame made of profiled tubes along each side and end face. This provides a high rigidity of the transport frame for a safe reception of the individual components of the plant. In an upright arrangement of the transport frame, at least one stiffening frame is advantageously provided parallel to the end side of the transport frame. For example, a stiffening frame can subdivide the transport frame into a lower and an upper region. It is advantageous to provide several stiffening frames, depending on the height of the transport frame, so that the transport frame is divided, for example, into a lower, a middle and an upper region for individual components. This stiffening frame is advantageously made of the same profile tubes as the transport frame.

Preferably, the transport frame is made of stainless steel tubes, which can be joined together by welding and/or bolting. For example, frames lying in the side and end faces of the transport frame can be welded together, and the stiffening frame can be fastened by bolting, so that a flexible arrangement of the stiffening frames can be adapted to the size of the plant to be integrated in it. Alternatively, the stiffening frame can also be welded to the frame forming the side faces.

The transport frames preferably contain the degasser and/or the separator and/or the condenser and/or a fraction recovery device. In particular, all these aforementioned components are fix mounted in the transport frame and are connected to each other by the control line and the necessary supply lines for reducing the alcohol content in the beverage.

For space-saving arrangement of the components in the transport frame, a column condenser and a tube separator are preferably used. As a result, these components have a small volume, which allows a high packing density of the components in the transport frame.

In addition, the transport frame is preferably used for the control cabinet. This allows the electrical installation or components to be completely carried out on site. Only a connection of the power supply is necessary to start up the plant electrically.

Another advantageous design provides for the pumps and/or the control cabinet in the lower and/or middle region of an upright transport frame. This allows the basic structure and arrangement of existing plants to be retained in the transport frame.

The first and second columns of the rectifier, the degasser and the separator are preferably mounted in an upper region of the vertically arranged transport frame and extend according to their length into the middle and/or lower region. This allows the entire volume of the cuboid transport frame to be fully utilized.

Another advantageous design provides for the components of the plant arranged in the transport frame to be connected together ready for use and to have interfaces for external connection on site. This means that both the control lines and/or supply lines for and/or between the components are completely installed. This enables a quick installation of the plant on site, especially since the interfaces are preferably provided as flange connections on the supply lines for the liquid or vaporous media and as plug connections for the electrical supply lines. It is advantageous that the plants, which are completely installed in such a transport frame, have a capacity of, for example, 10 h/l or 15 h/l. Such a plant arranged in the transport frame can, for example, be provided in a 20-foot standard container which has an internal width and height of approximately 2.4 m and a length of approximately 6 m.

The invention as well as other advantageous designs and further development of the same are described and explained in more detail below using the examples shown in the drawings. The features to be taken from the description and the drawings can be applied individually on their own or in any combination in accordance with the invention. It is shown:
Figure 1 shows a circuit diagram of a plant for reducing the alcohol content of a beverage,
Figure 2 a perspective view of the plant in a transport frame,
Figure 3 a schematic top view of the transport frame with the plant in Figure 2,
Figure 4 a schematic side view of the plant in the transport frame as shown in Figure 2, and
Figure 5 a perspective view of an alternative arrangement of the plant in the transport frame.

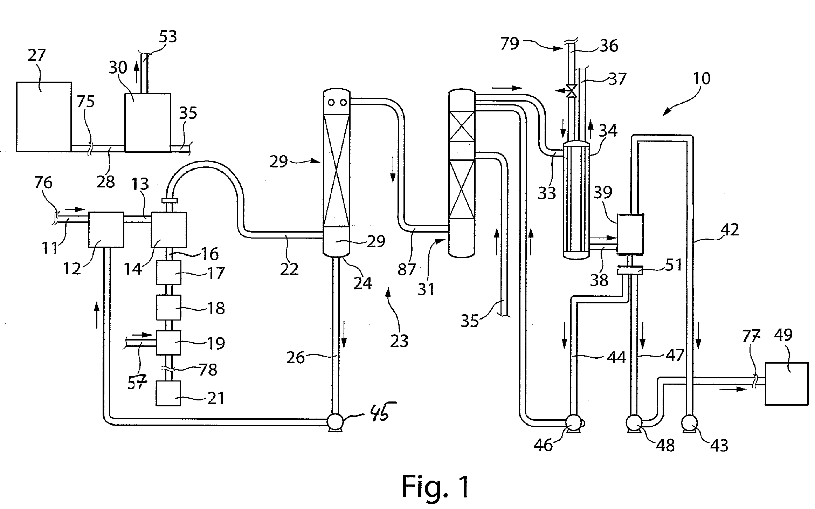

Figure 1 shows a schematic representation of a plant 10, in accordance with the invention, for the alcohol reduction of a beverage. Steam with a temperature of, for example, 110 °C is fed via a line 11 to a heat exchanger 12, the first circuit of which, in which this heat exchanger 12 is integrated, is not shown in detail. In the second circuit of heat exchanger 12 a line 13 is provided which leads to a separator 14. From the bottom of the separator 14 a pipe 16 emerges, which discharges the non-alcoholic beverage. The non-alcoholic beverage is preferably wine, sparkling wine or beer. In the outlet line 16 there is a heat exchanger 17, which cools down the temperature of the finished product and serves the heat economy. In addition, outlet line 16 contains a cooler 18 which cools the finished product down to 5 °C, for example. Finally, an inoculation station 19 follows, to which fractional substances such as CO2, fragrances and/or aromatic substances are fed, which are separated by fraction recovery from vapours of the alcoholic beverage. Through the injection station 19 the fractional substances are discharged in doses into the outlet line 16 and mixed into the alcoholic beverage. Downstream of the inoculation station 19 there is a collecting container 21 for receiving the finished product, i.e. the reduced-alcohol beverage.

The term "reduced-alcohol beverage" also includes beverages in which the alcohol from the beverage is reduced to such an extent that these beverages are described as dealcoholised or alcohol-free and may in particular also contain 0.0% alcohol.

From the head of the separator 14, a first vapour line 22 leads the warm, non-separated vapours to a lower region of a rectifier 23. This rectifier 23 comprises a second column 29 or lower column. From the bottom 24 of the rectifier 23, a line 26 leads to a pump 45, through which the reduced-alcohol beverage is conveyed to the heat exchanger 12. This circuit is thus closed, in which the reduced-alcohol beverage is fed.

The alcoholic beverage is stored in a storage tank 27, which has to be reduced in alcohol content. From the storage tank 27 a line 28 leads to a degasser 30, in which fractional substances, especially CO2, are discharged via a line 53. These fractional substances can be fed to a fractional substance recovery device not shown. The fractional substances are fed to the inoculation station 19 via a line 57 which leads away from it. From the degasser 30, line 35 leads to the second circuit of plant 10. The alcoholic beverage is fed via line 35 to the middle section of a first column 31 of the rectifier 23. A second vapour line 33 is provided at the upper end region of the rectifier 23 or at the head 32 of the rectifier 23, which discharges the vapours containing alcohol, flavour and/or aromas. The temperature in head 32 is, for example, 30 °C. This corresponds to approximately 44 mbar. The temperature in the rectifier 23 above the bottom 24 is, for example, 39 °C at a pressure of, for example, 70 mbar.

A third vapour line 87 is provided between the second column 29 and the first column 31.

In the steady state of rectifier 23, the second vapour line 33 removes about 80 % of the alcohol, alcohol always being understood to be ethanol. The second vapour line 33 leads to a condenser 34 which is fed via a line 36 with coolant, in particular glycol. The coolant is discharged through one line 37. In the head of the condenser 34, the vapours fed to the condenser 34 may not yet condensed, which is why the vapours are fed to a separator 39 via a line 38. A vacuum line 42, which is connected to a vacuum pump 43 and which may in a first step also generates the vacuum present in the rectifier 23, leads into the head of the separator 39. From the bottom of the separator 39 there is a line 44 to a controller 51. A controller 51 determines the quantity ratio in lines 44 and 47 of separator 39. This line 47 discharges the alcohol not required for feedback via a pump 48 to an alcohol tank 49, which carries at least liquefied alcohol in liquid form, for example with a concentration not exceeding 82 %. The percentage may be between 20 % and 80 % depending on the dealcoholisation effort. The liquefied alcohol is fed via a pump 46 to the head 32 of the rectifier 23, in particular at a level no higher than the outlet of the second vapour line 33 above the first column 31.

When the plant 10 is started up, line 47 initially remains closed until the alcohol content in lines 44, 33 and 38 has reached the desired level, e.g. 80 %. A further increase in the alcohol content can be prevented by the controller 51 by releasing line 47, to the extent that it is ensured that it maintains the desired level on the alcohol percentage return path.

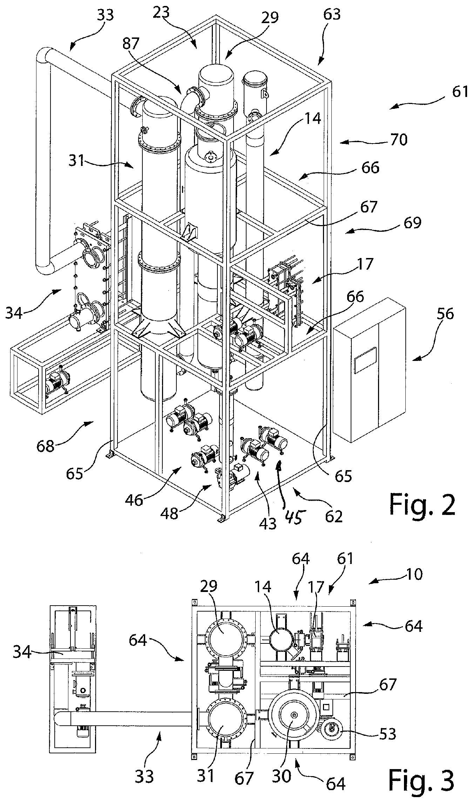

Figure 2 shows a perspective view of plant 10, at least part of which is arranged in a transport frame 11. This transport frame 11 is cuboidal in shape and comprises two opposite end faces 62, 63 and four side faces 64. The end faces 62, 63 and/or the side faces 64 are formed by a closed frame 65 made of profiled tubes. These profile tubes are preferably welded together and form the closed frame 65, whereby the two adjacent side faces 64 are formed by a common elongated tube 65. Due to this design and the structure of the transport frame 61 a rigid arrangement can be given. Furthermore, the transport frame 61 comprises at least one stiffening frame 66 and/or individual stiffening tubes 67, for example two stiffening frames 66 aligned parallel to the end faces 62, 63, which subdivide and stiffen the transport frame into a lower region 68, a middle region 69 and an upper region 70 in order to accommodate individual components of the plant 10 therein. This stiffening frame 66 is preferably formed from tubes which correspond to the transport frame 61. These tubes of stiffening frame 66 can be welded or bolted to those of transport frame 61. Furthermore, stiffening tubes 67 can be provided, for example to support the stiffening frame 66 in addition to a end side 62. Such stiffening tubes 67 can also be inserted in order to fix additional components of the plant 10 to them.

The profile tubes of the transport frame 61, the stiffening frame 66 and/or the stiffening tubes 62 are preferably made of stainless steel. It is advantageous to use square tubes, as the outside of the tubes also provide simple mounting surfaces for fixing the individual components.

Feet 72 or brackets can preferably be arranged on one end face 62 of the transport frame 61 so that the transport frame 61 can be fixed in a standing position on a floor at the installation site. The transport frame 61 is positioned upright in the position of use or for the operation of the plant 10. For the transport of the plant 10 with the transport frame 61, a side surface 64 is designed at least as a support surface in order to transport the transport frame 61 lying down. The external dimensions of transport frame 61 are preferably adapted to the internal dimensions of a standard container, such as a 20-foot, 40-foot or 45-foot container. The transport frame can also be adapted to special sizes, such as so-called high-cube containers or heavy tested containers.

In the first version according to Figure 2, transport frame 61 is equipped with rectifier 23 with first column 31 and second column 29 as well as degasser 30 and separator 14. In addition, the transport frame contains pumps 43, 45, 46, 48. Outside the transport frame 61, for example, the condenser 34 and the control cabinet 56 are located. Alternatively, the degasser 30 can also be provided outside and the condenser 34 inside the transport frame 61. The other necessary supply lines, connecting lines and/or connections as well as the electrical connections and/or control lines, regulators, pressure monitors, sensors or similar are not shown for the sake of clarity, but are installed. The components of the plant 10 arranged in transport frame 61 are assembled completely and ready for use. For example, the second vapour line 33 is connected to the first column 31 for the final installation of the plant 10. Furthermore, the control cabinet is connected to the other electrical components within transport frame 61 via a central interface. Furthermore, only the connection of a storage container for the supply opening of the alcoholic beverage, a collection container for the alcoholic beverage discharged from the plant 10 and a tank 49 for the non required alcohol is required. In addition, the connection for the supply of a cooling medium and a steam or hot water is required for the operation of plant 10. From this it is obvious that after the installation of the transport frame 61, in which the plant 10 is located, a quick commissioning is possible.

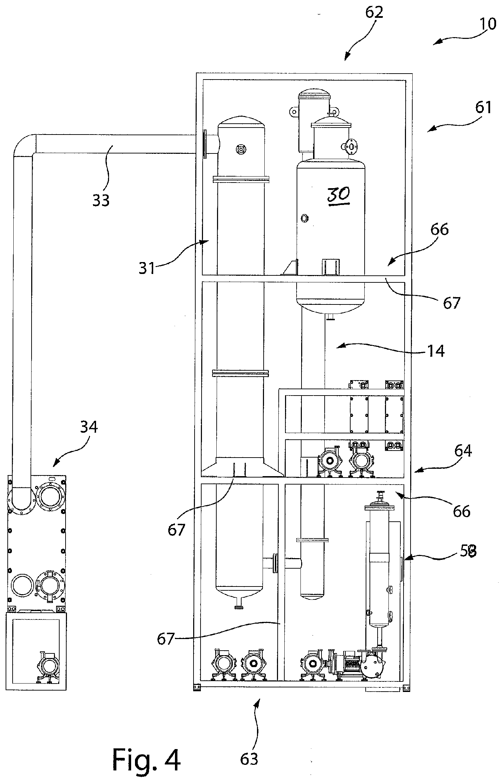

Figure 3 shows a top view of the design as shown in Figure 2. Figure 4 shows a schematic side view of the design as shown in Figure 2. From these two diagrams it is also clear that a fractional material recovery device 58 is provided within the transport frame 61. This can be located in a lower section 68.

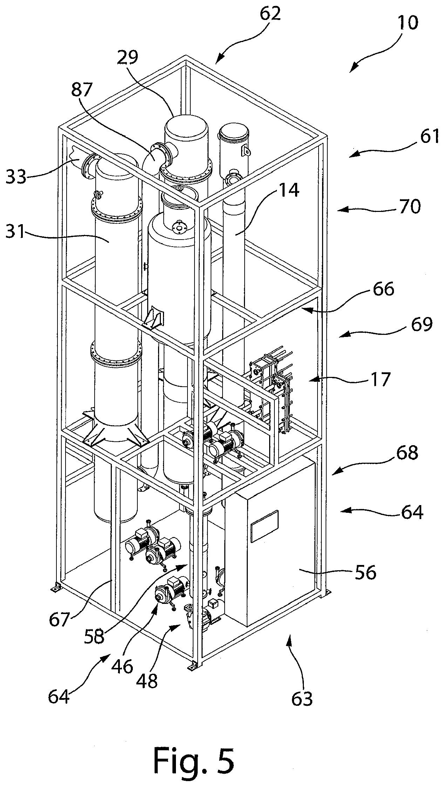

Figure 5 shows a perspective view of an alternative version of the plant 10 in transport frame 61 to figures 2 to 4. In this design, the degasser 30, the rectifier 23 with the first column 31 and the second column 29, the separator 14, the condenser 34, the pumps 43, 45, 46, 48, fractional substance recovery device 58 and at least one further separator 39 and the control cabinet 56 are arranged inside the transport frame 61. Furthermore, not shown in detail, but also arranged within the transport frame 61, at least one heat exchanger and in some cases one cooler are provided. Thus, the plant 10 can be completely installed and arranged within the transport frame 61. Within the transport frame 61, interfaces are provided for the complete installation of the plant 10 on site. For example, an interface 75 in the form of a flange connection is provided for connecting the storage tank 75 from which the alcoholic beverage is fed to the plant 10. In addition, interface 76 is provided, via which hot steam is fed to a heat exchanger which is connected upstream of separator 14. A further interface 77 is used to connect the alcohol tank 49 for discharging the alcohol that is not required. An interface 78 is provided for connecting the collecting container 21 to the outlet line 16 for discharging the beverage reduced in alcohol content. Coolant can be fed to condenser 34 via an interface 79. A further interface is used to connect the control cabinet 56 to an electrical power supply.

## Claims

1. Plant (10) for reducing the alcohol content in a beverage,
- with at least one degasser (30), to which the alcoholic beverage is supplied from a storage container which is connectable thereto,
- with a rectifier (23) comprising a first column (31) and a second column (29) which are arranged separately and spatially adjacent to one another,
- with a line (26) branching off a bottom (24) of the second column (29) and leading to a separator (14), from which a reduced-alcohol beverage is discharged from the plant (10) via an outlet line (16),
- with a condenser (34) which is connected downstream of the rectifier (23),
- with a first vapour line (22), which is connected by an inlet (65) to the separator (14) and by an outlet (61) to the second column (29),
- with a second vapour line (33), which is connected by an inlet (65) to the first column (31) and by an outlet to the condenser (34),
- with a third vapour line (87), which is connected by an inlet (65) to the second column (39) and by an outlet (61) to the first column (31),
- with several pumps (43, 45, 46, 48) through which the alcoholic beverage, the vapours or the reduced-alcohol beverage are transported in the plant (10), **characterized in,**
- **that** at least the rectifier (23) and a plurality of pumps (43, 45, 46, 48) are arranged completely within a transport frame (61).

2. Plant (10) according to claim 1, **characterized in that** the transport frame (61) has an outer dimension which corresponds to an inner dimension of a standard container.

3. Plant (10) according to claim 1 or 2, **characterized in that** the transport frame (61) is designed to stand on one end face (62) for operation of the plant (10) and to lie on a side face (64) for transport, in particular in a standard container.

4. Plant (10) according to one of the preceding claims, **characterized in that** the transport frame (61) is cuboid and has a closed circumferential frame (65) made of profiled tubes along each side surface (64).

5. Plant (10) in accordance to one of the preceding claims, **characterised in that** the transport frame (61) is constructed in an upright arrangement in height by at least one stiffening frame (66) aligned parallel to the end face (62, 63), by which the transport frame (61) is subdivided into a lower region (68) and an upper region (70) or, in the case of two stiffening frames (66), into a lower region (68), a central region (69) and an upper region (70), and preferably the stiffening frame (66) is formed from the same profile tubes as the stiffening frame (65).

6. Plant (10) according to one of the preceding claims, **characterized in that** the transport frame (61) is formed from stainless steel tubes which are bolted and/or welded.

7. Plant (10) according to one of the preceding claims, **characterized in that** the degasser (30) and/or the separator (14) and/or the condenser (34) and/or the fractional substance recovery device (58) and/or a further separator (39) is provided in the transport frame (61).

8. Plant (10) according to one of the preceding claims, **characterized in that** the condenser (34) is provided as a column condenser and the separator (14, 39) is provided as a tubular separator in the transport frame (61).

9. Plant (10) according to one of the preceding claims, **characterized in that** the control cabinet (56) is provided in the transport frame (61).

10. Plant (10) according to one of the preceding claims, **characterized in that** the pumps (43, 45, 46, 48) and/or the control cabinet (56) are provided in the lower region (68) and/or central region (69) and the first column (31), the second column (29), the degasser (30) and the at least one separator (14, 39) are fixed in the upper region (70) of the transport frame (61) and extend in the central and/or lower region (68, 69).

11. Plant (10) according to one of the preceding claims, **characterized in that** the components of the plant (10) arranged in the transport frame (61) are connected to one another ready for use and the control lines and/or supply lines and/or monitoring lines are completely assembled, the supply lines leading to the plant (10) or out of the plant (10) having interfaces (75, 76, 77, 78, 79) which are preferably designed as flange connections or plug-in connections within the transport frame (61).
